# NEUE EUROPÄISCHE PATENTSCHRIFT

(11) **EP 2 411 582 B2**
(45) Veröffentlichungstag und Bekanntmachung des Hinweises auf die Entscheidung über den Einspruch: **17.03.2021**
(45) Hinweis auf die Patenterteilung: 22.06.2016
(21) Anmeldenummer: 10706617.7
(22) Anmeldetag: 01.03.2010
(51) Int. Cl.: E01C 23/088

(54) **AUSWERFEREINHEIT FÜR EINE STRASSENFRÄSMASCHINE ODER DERGLEICHEN**
EJECTOR UNIT FOR A ROAD MILLING MACHINE
UNITÉ D'ÉJECTION POUR UNE FRAISEUSE DE ROUTE

(30) Priorität: 25.03.2009 DE 102009014729
(43) Veröffentlichungstag der Anmeldung: 01.02.2012
(60) Teilanmeldung: 16168065.7
(73) Patentinhaber: Wirtgen GmbH, 53578 Windhagen (DE)
(72) Erfinder: BUHR, Karsten, 56594 Willroth (DE); LEHNERT, Thomas, 56587 Oberraden (DE); ABRESCH, Stefan, 56369 Dierdorf (DE); BARIMANI, Cyrus, 53639 Koenigswinter (DE); HAEHN, Guenter, 53639 Koenigswinter (DE)
(74) Vertreter: Ruttensperger Lachnit Trossin Gomoll
(86) Internationale Anmeldenummer: PCT/EP2010/052562
(87) Internationale Veröffentlichungsnummer: WO 2010/108760

(56) Entgegenhaltungen:
- DE-A1- 2 316 406
- DE-A1- 3 911 947
- DE-C1- 3 708 520
- JP-A- H 083 919
- US-A- 4 697 850
- US-A- 5 101 583

## Beschreibung

Die Erfindung betrifft eine Auswerfereinheit für eine Straßenfräsmaschine mit einem Träger und einem Auswerfer, der eine Förderfläche aufweist, wobei der Auswerfer auswechselbar an dem Träger befestigbar ist.

Straßenfräsmaschinen weisen üblicher Weise ein Fräsrohr auf, auf dessen Oberfläche eine Vielzahl von Meißelhaltern befestigt sind. Dabei sind die Meißelhalter meist Teil eines Meißelhalterwechselsystems, das auch ein Basisteil umfasst. Das Basisteil ist auf der Oberfläche des Fräsrohrs angeschweißt und nimmt den Meißelhalter auswechselbar auf. Der Meißelhalter dient zur Befestigung eines Meißels, üblicherweise eines Rundschaftmeißels, wie er beispielsweise aus der DE 37 01 905 A1 bekannt ist.
Die Meißelhalter sind derart auf der Oberfläche des Fräsrohrs angeordnet, dass sich spiralförmige Wendel ergeben. Die Wendel gehen dabei vom Randbereich des Fräsrohrs aus und drehen sich zur Mitte des Fräsrohrs hin.
Damit treffen sich die Wendel, die von den gegenüberliegenden Randbereichen ausgehen, jeweils in der Mitte des Fräsrohrs. In diesem Bereich sind dann auch ein oder mehrere Auswerfer angeordnet. Die Wendeln fördern das von den Meißeln abgetragene Gut zu den Auswerfern. Die transportieren es dann aus dem Wirkungsbereich des Fräsrohrs ab.
Die Auswerfer unterliegen einem starken Verschleißangriff und müssen daher regelmäßig überprüft und ausgewechselt werden. Hierzu muss der auf dem Fräsrohr angeschweißte Auswerfer abgetrennt und ein neuer aufgeschweißt werden. Dabei ist auf die exakte Positionierung und Ausrichtung des Auswerfers zu achten, um eine ideale Ausförderleistung zu erreichen. Diese Tauscharbeit ist im beengten Arbeitsbereich des Fräsrohrs mühsam.
Aus der DE 3708520 C1 ist eine Fräswalze für eine Straßenfräsmaschine bekannt. Die Fräswalze weist einen zylindrischen Walzenkörper auf, auf dem Fräsmeißel in Haltern angeordnet sind. Die Halter sind dabei mit der Oberfläche des zylindrischen Walzenkörpers verschweißt. Und zueinander in Umfangsrichtung beabstandet angeordnet. Die Lücken zwischen den Haltern sind mit Förderstegen geschlossen.
Aus der JP H08 3919 A ist eine weitere Fräswalze für eine Straßenfräsmaschine bekannt. Dabei sind auf der Oberfläche der Fräswalze Meißelhalter positioniert. Weiterhin sind auf der Fräswalzen Oberfläche Auswerfereinheiten montiert. Die Auswerfer Einheiten umfassen einen Träger, der auf der Oberfläche der Fräswalze verschweißt ist. Mit dem Träger kann ein Auswerfer auswechselbar verbunden werden
Es ist Aufgabe der Erfindung, einen verbesserten Auswerfer bereitzustellen, der eine einfache Maschinenwartung ermöglicht.
Diese Aufgabe wird mit einer Auswerfereinheit nach Anspruch 1 gelöst. Demgemäß ist der Auswerfer auswechselbar an dem Träger befestigbar.

Auf diese Weise entsteht ein Werkzeugsystem bei dem der Auswerfer im Schadens- oder Verschleißfall einfach und schnell gewechselt werden kann. Damit ergibt sich eine deutliche Arbeitserleichterung und es lassen sich die Maschinenstillstandzeiten deutlich reduzieren.

Erfindungsgemäß ist es vorgesehen, dass der Auswerfer in mindestens zwei verschiedenen Betriebsstellungen an dem Träger befestigbar ist.

Der Auswerfer kann in einer Betriebsstellung bis zur Erreichung der Verschleißgrenze genutzt werden. Dann wird der Auswerfer in die nächste Betriebsstellung gebracht und kann dann weitergenutzt werden. Auf diese Weise ergibt sich für den Auswerfer eine deutlich verlängerte Standzeit, als bei den üblichen Auswerfern.Hierbei ist es erfindungsgemäß weiterhin vorgesehen, dass zum Wechsel der Betriebsstellungen der Auswerfer um 180° verdreht angebaut ist. Hierbei macht man sich die Erkenntnis zunutze, dass der Auswerfer im Wesentlichen an seinem dem Fräsrohr abgewandten Bereich verschleißt. Ist der Verschleißzustand dort erreicht, wird der Auswerfer demontiert und um 180° gedreht wieder angebaut. Die Auswerferstandzeit lässt sich dadurch deutlich verlängern, im Idealfall sogar verdoppeln. Um beim Wechsel der Betriebsstellungen des Auswerfers möglichst wenig Zeit zu verlieren und die Montage eindeutig zu gestalten, ist es vorgesehen, dass der Auswerfer und der Halter eine mechanische Schnittstelle bilden, die eine Montage des Auswerfers auf Umschlag ermöglicht.
Eine sichere Befestigung des Auswerfers am Tragteil ergibt sich dadurch, dass der Auswerfer eine Befestigungsaufnahme und/oder einen Befestigungsansatz aufweist, und dass der Auswerfer mittels einem oder mehreren Befestigungselementen mittelbar oder unmittellbar mit dem Träger verbunden ist.
Eine denkbare Erfindungsalternative ist dergestalt, dass der Auswerfer mittels einer Befestigungsseite an einer Stützfläche des Trägers flächig abgestützt ist, dass der Auswerfer einen Fixieransatz und/oder eine Fixieraufnahme aufweist und dass der Fixieransatz in eine Fixieraufnahme des Trägers eingreift und/oder ein Fixieransatz des Trägers in die Fixieraufnahme des Auswerfers eingreift. Mit der ineinanderzahnenden Verbindung von Fixieransatz und Fixieraufnahme wird eine formschlüssige Verbindung geschaffen, über die sich Bearbeitungskräfte belastungsoptimiert ableiten lassen. Dies wird insbesondere dann möglich, wenn vorgesehen ist, dass die formschlüssige Verbindung einen Versatz des Auswerfers gegenüber dem Träger quer zur Vorschubrichtung behindert oder blockiert.
Bei der erfindungsgemäßen Auswerfereinheit kann es vorgesehen sein, dass der Träger einen Befestigungsfuß aufweist, an den ein Stützteil angeformt ist, und dass der Befestigungsfuß eine im Wesentlichen in Vorschubrichtung verlaufende Befestigungsfläche aufweist. Der Träger kann mittels der Befestigungsfläche lagerichtig auf dem Fräsrohr positioniert und daran befestigt, insbesondere angeschweißt, werden.

Der Träger lässt sich als kostengünstiges Bauteil einfach fertigen.

Wenn vorgesehen ist, dass der Befestigungsfuß in und/oder entgegen der Vorschubrichtung gegenüber dem Stützteil verbreitet ist, dann entsteht eine belastungsoptimierte Geometrie. Der Übergangsbereich zwischen dem Stützteil und dem Befestigungsfuß ist im Werkzeugeinsatz hohen Biegespannungen ausgesetzt. Die Verbreiterung verringert dort die Materialspannungen.
Gemäß einer bevorzugten Ausführungsvariante der Erfindung kann es vorgesehen sein, dass der Auswerfer eine Förderfläche aufweist, die im Wesentlichen quer zur Vorschubrichtung der Auswerfereinheit angeordnet ist und zumindest bereichsweise in Richtung entgegen der Werkzeugvorschubrichtung gemuldet, insbesondere schaufelartig eingetieft ausgebildet ist. Diese gemuldete Formgebung ermöglicht eine Geometrie, die die Ausförderrate verbessert.
Wenn vorgesehen ist, dass in die Förderfläche eine oder mehrere Vertiefungen eingebracht sind, dann kann sich während des Werkzeugeinsatzes abgetragenes Gut in den Vertiefungen ablagern. Es bildet dort eine "natürliche" Verschleißschutzschicht. Gemäß einer Erfindungsvariante kann es vorgesehen sein, dass als Befestigungsaufnahme wenigstens eine Schraubaufnahme verwendet ist, dass die Schraubaufnahme der Frontseite des Auswerfers zugekehrt in eine Schraubenkopfaufnahme ausläuft, in der ein Schraubenkopf einer Befestigungsschraube zumindest bereichsweise unverdrehbar aufnehmbar ist. Mit den Schraubverbindungen ist ein schneller und problemloser Auswerfertausch möglich. Die versenkte oder teilversenkte Aufnahme des Schraubenkopfs verhindert einen abrasiven Angriff am versenkten Kopfbereich. Darüber hinaus wird ein Lösen der Schraube hier verhindert.
Wenn die Gestaltung des Auswerfers derart ist, dass auf der der Förderfläche abgewandten Rückseite eine oder mehrere angeformte Versteifungsrippen angeordnet sind, dann kann mit geringem Materialaufwand ein ausreichend steifer Auswerfer konstruiert werden.

Eine bevorzugte Erfindungsvariante ist dergestalt, dass die Befestigungsseite einen konvexen Befestigungsabschnitt zur Anlage an einem konkaven Aufnahmeabschnitt eines Trägers aufweist. Auf diese Weise ergibt sich zwischen dem Träger und dem Auswerfer eine Flächenverbindung, über die sich Bearbeitungskräfte auch bei unsymmetrischer Krafteinwirkung auf die Förderfläche sicher abtragen lassen.

Wenn vorgesehen ist, dass der Träger den Auswerfer derart hält, dass die Förderfläche gegenüber der Vorschubrichtung leicht geneigt verläuft, dann kann die Ausförderleistung optimiert werden. Es hat sich gezeigt, dass bei einer Neigungseinstellung im Winkelbereich von ± 20° eine besonders gute Leistung erreicht wird. Überraschender Weise ergibt sich ein Optimum bei negativem Neigungswinkel, nämlich bei einer Neigung um 5° bis 15° entgegen der Vorschubrichtung.

Eine zusätzliche Verbesserung der Auswerferstandzeit lässt sich dadurch erreichen, dass im Bereich der Förderfläche wenigstens ein Verschleißschutzelement angeordnet ist, das aus einem verschleißfesteren Material als die Förderfläche besteht, wobei insbesondere vorgesehen sein kann, dass das Verschleißschutzelement in einem Hartwerkstoffelement oder einer Auftragsschweißung gebildet ist.

Die Erfindung wird im Folgenden anhand eines in den Zeichnungen dargestellten Ausführungsbeispieles näher erläutert. Es zeigen:
- Figur 1: eine Fräswalze einer Straßenfräsmaschine in Frontansicht,
- Figur 2: die Fräswalze gemäß Figur 1 in Seitenansicht,
- Figur 3: die Ansicht gemäß Figur 2 vergrößert und in leicht veränderter Darstellung,
- Figur 4: eine Auswerfereinheit in perspektivischer Frontansicht,
- Figur 5: die Auswerfereinheit gemäß Figur 4 in perspektivischer Rückansicht,
- Figur 6: einen Träger der Auswerfereinheit gemäß Figur 5 in perspektivischer Rückansicht,
- Figur 7: den Träger gemäß Figur 6 in perspektivischer Ansicht,
- Figur 8: einen Auswerfer der Auswerfereinheit gemäß Figur 6 in perspektivischer Frontansicht,
- Figur 9: den Träger gemäß Figur 8 in perspektivischer Rückansicht,
- Figur 10: in perspektivischer Rückansicht eine zweite Ausgestaltung einer Auswerfereinheit mit einem Auswerfer und einem Träger und
- Figur 11: die Anordnung gemäß Figur 10 in perspektivischer Frontansicht.

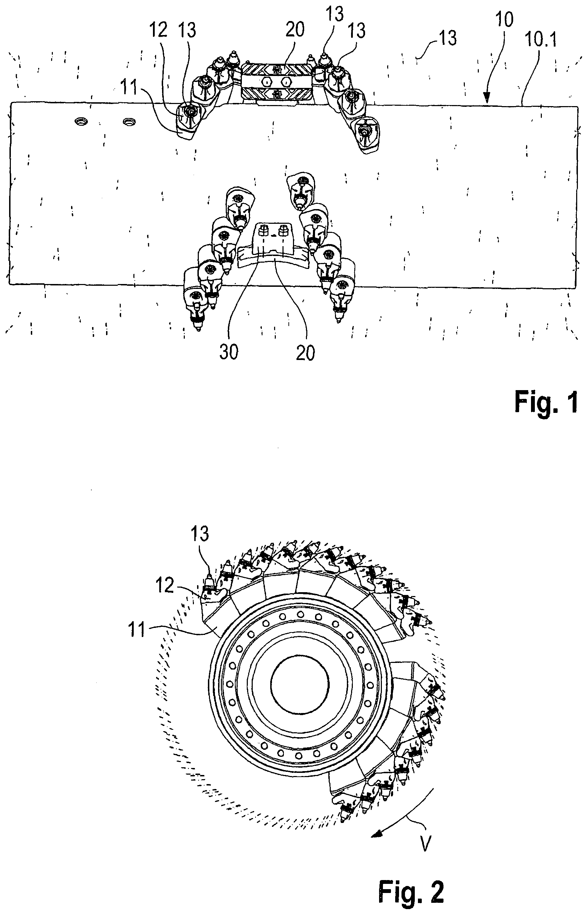

Figur 1 zeigt eine Fräswalze mit einem zylindrischen Fräsrohr 10, auf dessen Walzenoberfläche 10.1 eine Vielzahl von Basisteilen 11 von Meißelhalterwechselsystemen aufgeschweißt sind. Die Basisteile 11 tragen auswechselbare Meißelhalter 12. In den Meißelhaltern 12 ist jeweils ein Meißel 13, nämlich ein Rundschaftmeißel auswechselbar aufgenommen. Die Basisteile 11 sind einander so zugeordnet, dass sie eine Wendel, nämlich eine Transportwendel bilden. Dabei dreht sich die Wendel, ausgehend von der Seite des Fräsrohrs 10 auf der Walzenoberfläche 10.1 in Richtung auf die zwischen den beiden Seiten gebildete Fräsrohrmitte. In den Figuren 1 und 2 sind zur besseren Übersichtlichkeit nur ein Teil der Meißelhalterwechsel-Systeme dargestellt. Von den nicht gezeigten Meißelhalterwechsel-Systemen sind ersatzweise strichlierte Linien gezeigt, die die Mittellängsachse der Meißel 13 repräsentieren. Wie diese Linien erkennen lassen, stehen beidseitig der Fräsrohrmitte jeweils mehrere Transportwendel.

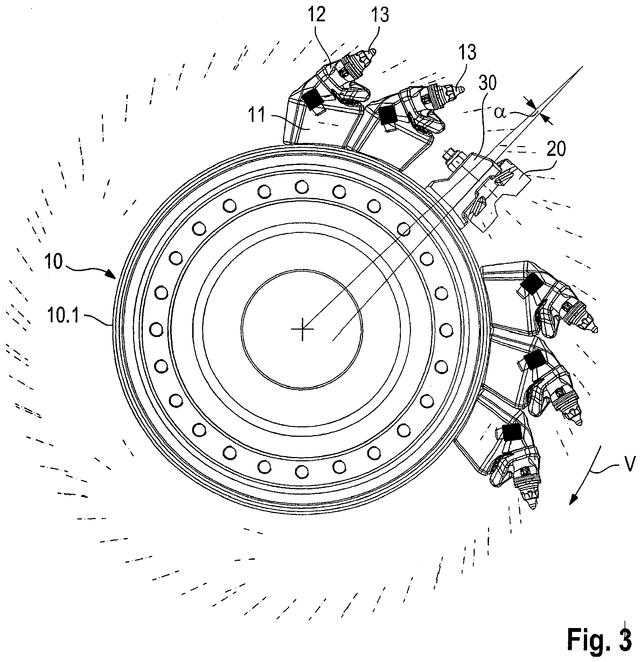

Die Transportwendel treffen sich paarweise im Bereich der Fräsrohrmitte. Wie die Figur 1 erkennen lässt, ist dort jeweils mindestens eine Auswerfereinheit angeordnet. In der Figur 3 sind gegenüber der Darstellung gemäß Figur 2 die Meißelhalterwechsel-Systeme nicht gezeigt, die den Blick auf die Auswerfereinheit verstellen. Wie diese Darstellung erkennen lässt, wird die Auswerfereinheit von einem Tragteil 30 und einem Auswerfer 20 gebildet.

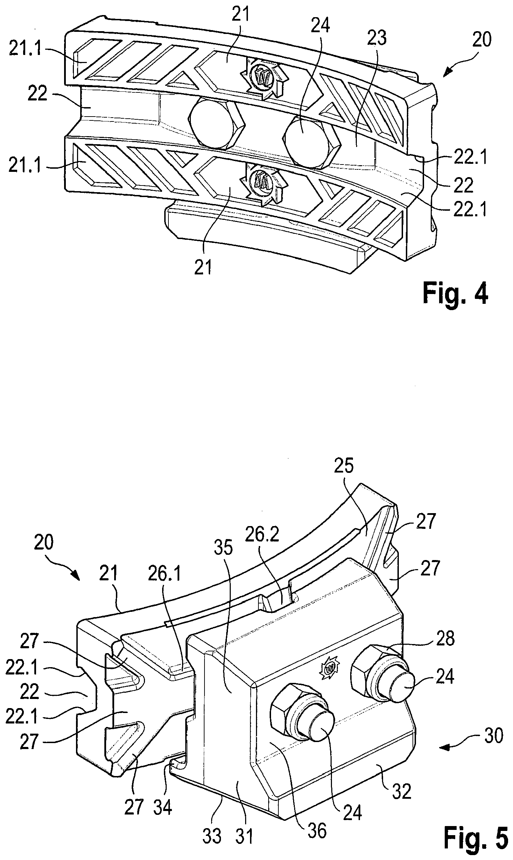

In den Figuren 4 und 5 ist die Auswerfereinheit in Alleindarstellung gezeigt.

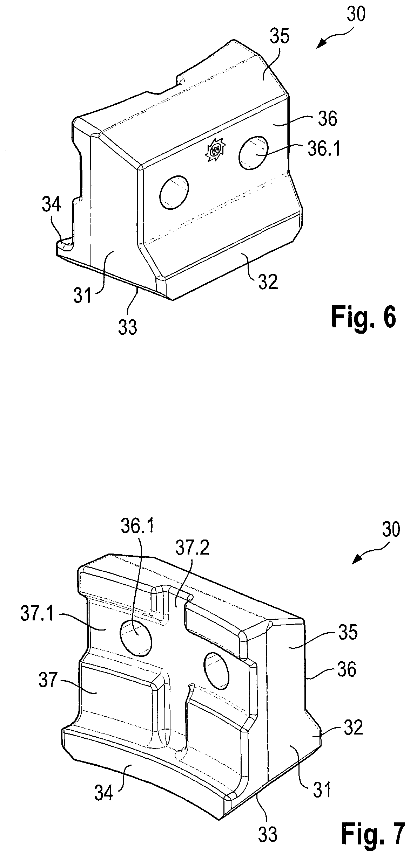

Unter Bezugnahme auf Figuren 6 und 7 wird zunächst die Konstruktion des Tragteils 30 erläutert. Es weist einen Befestigungsfuß 31 auf, der an seiner Unterseite eine Befestigungsfläche 33 bildet. Mit dieser kann das Tragteil 30 auf die Walzenoberfläche 10.1 aufgesetzt und seitlich verschweißt werden. An den Befestigungsfuß 31 ist nach oben abstehend ein Stützteil 35 angeformt, der eine Rückseite 36 bildet. Der Befestigungsfuß 31 ist mittels eines Ansatzes 32 über die Rückseite 36 verbreitert, so dass er eine breite Befestigungsfläche 33 mit großem Stützabstand bildet. Darüber hinaus bringt die durch den Ansatz 32 bewirkte Querschnittsverbreiterung eine Verstärkung des hoch belasteten Übergangsbereiches zwischen Befestigungsfuß 31 und Stützteil 35. Eine weitere Verbreiterung der Befestigungsfläche 33 wird mit einem frontseitigen Vorsprung 34 erreicht, der sich ebenso wie der Ansatz 32 über die gesamte Breite des Tragteils 30 erstreckt. Das Tragteil 30 weist frontseitig eine Stützfläche 37 auf, die sich über die Vorderseite des Stützteils 35 und auch über einen Teil des Befestigungsfußes 31 erstreckt. Diese Ausbildung der Stützfläche 37 ermöglicht eine festigkeitsoptimierte Abstützung des Auswerfers 20. In die Stützfläche 37 sind zwei Aufnahmen 37.1, 37.2 eingearbeitet. Die beiden Aufnahmen 37.1, 37.2 sind so in die Stützfläche 37 eingetieft, dass sie trogartige Mulden bilden.

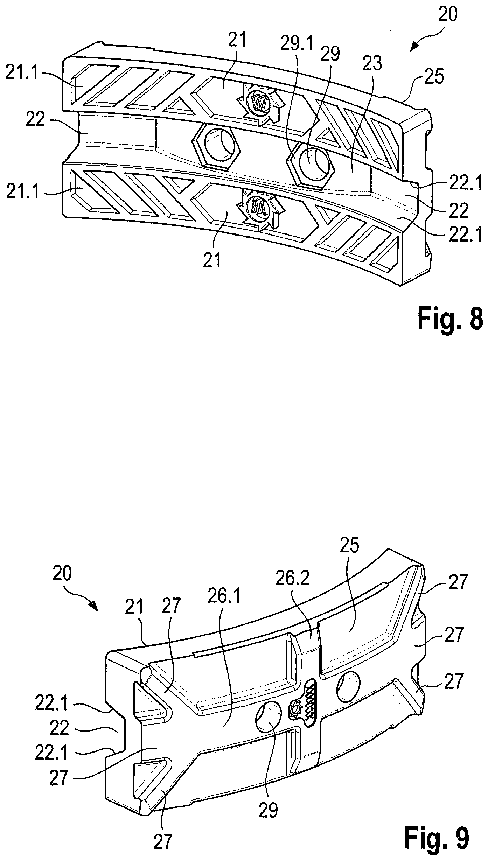

Mit Bezug auf die Figuren 8 und 9 wird nachfolgend der Auswerfer 20 erläutert. Er ist plattenförmig als Gesenk-Schmiedeteil ausgebildet und daher besonders steif. Der Auswerfer 20 weist eine frontseitige Förderfläche 21 auf.

Diese ist mit Eintiefungen 21.1, 22 versehen. Zwischen den Eintiefungen 21.1 stehen Rippen, die im Winkel zur Senkrechten stehen und somit in Richtung zur Auswerfermitte geneigt sind. Die Eintiefungen nehmen während des Betriebseinsatzes Abraummaterial auf, so dass sich ein "natürlicher" Verschleißschutz bildet. Eine besonders gute Förderrate wird zudem dadurch erreicht, dass die Förderfläche 21 konkav und damit schaufelartig ausgebildet ist. Die Eintiefung 22 weist zwei Schrägflächen 22.1 auf, die im Winkel zu der Förderfläche 21 stehen und die Förderwirkung unterstützen.

Zwischen den beiden Eintiefungen 22 steht ein verdickter Ansatz 23, der zwei als Durchgangsbohrungen ausgebildete Schraubaufnahmen 29 aufnimmt. Die Schraubaufnahmen 29 laufen frontseitig in sechseckige Schraubenkopfaufnahmen 29.1 aus.

Die Figur 9 zeigt die Rückseite des Auswerfers 20. Wie diese Darstellung erkennen lässt, stehen rückseitig rippenartige Fixieransätze 26.1, 26.2 vom Auswerfer 20 vor. Die Fixieransätze 26.1, 26.2 sind in ihrer Anordnung und Dimensionierung auf die Anordnung und Form der Aufnahmen 37.1, 37.2 des Trägers 30 angepasst. Die Schraubaufnahmen 29 sind durch den Fixieransatz 26.1 hindurchgeführt.

Wie Figur 9 weiter erkennen lässt, sind in den rückseitigen Eckbereichen des Auswerfers 20 Versteifungsrippen 27 angeordnet. Diese sind an den horizontalen Fixieransatz 26 angeschlossen, so dass sich eine optimale Kraftableitung ergibt.

Zur Befestigung des Auswerfers 20 wird dieser mit seiner Rückseite an die Stützfläche 37 des Trägers 30 angesetzt. Dabei greifen dann die Fixieransätze 26.1, 26.2 in die korrespondierenden Aufnahmen 37.1, 37.2 ein. Auf diese Weise ergibt sich eine kreuzweise Verzahnung, die eine Verschiebung des Auswerfers 20 gegenüber dem Träger 30 in Achs- und Radialrichtung des Fräsrohrs 10 verhindert. Über diese verzahnte Verbindung können große Teile der während des Werkzeugeinsatzes entstehenden Kräfte abgeleitet werden.

Die Schraubaufnahmen 29, 36.1 des Auswerfers 20 und des Trägers 30 stehen in Flucht, so dass Befestigungsschrauben 24 (siehe Figuren 4 und 5) durch sie hindurchgesteckt werden können. Der Schraubenkopf der Befestigungsschrauben 24 findet in der Schraubenkopfaufnahme 29.1 Platz, wo er unverdrehbar gehalten wird. Auf die Befestigungsschrauben 24 können, vorzugsweise selbst sichernde Muttern 28 aufgeschraubt und somit der Auswerfer 20 am Träger 30 fixiert werden.

Während des Werkzeugeinsatzes verschleißt vornehmlich der radial außenstehende Bereich des Auswerfers 20. Der Auswerfer 20 ist, wie die Figuren 8 und 9 erkennen lassen, symmetrisch zur Mittelquerebene ausgebildet. Bei Erreichen der Verschleißgrenze kann er daher abgebaut und um 180° gedreht wieder angebaut werden.

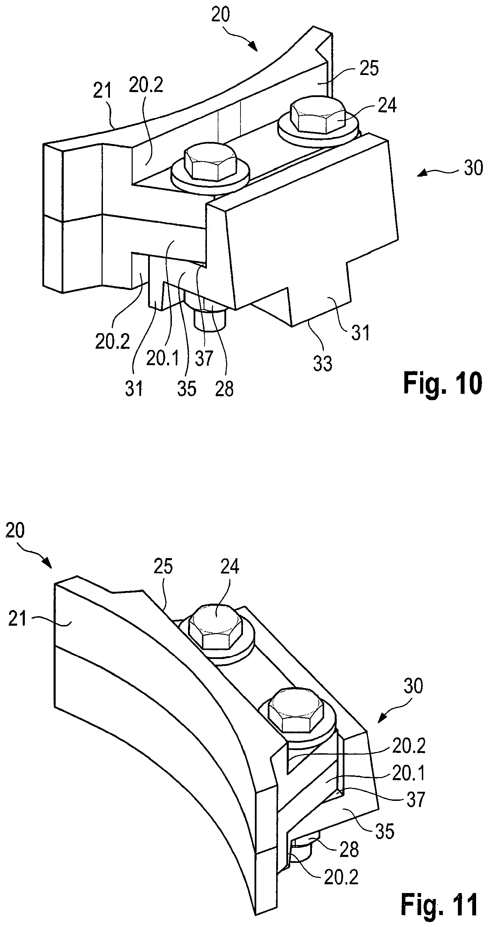

Figuren 10 und 11 zeigen eine weitere Ausgestaltungsvariante einer erfindungsgemäßen Auswerfereinheit. Diese umfasst wieder einen Auswerfer 20 und einen Träger 30. Der Auswerfer 20 besitzt wieder eine gemuldete Förderfläche 21, die in Bearbeitungsrichtung gewandt ist, wobei die Muldung konkav in Richtung entgegen der Bearbeitungsrichtung eingetieft ist. Der Förderfläche 21 abgewandt weist der Auswerfer 20 an seiner rückwärtigen Befestigungsseite 25 einen Befestigungsansatz 20.1 auf. Dieser steht blockartig entgegengesetzt der Bearbeitungsrichtung ab. Er besitzt zwei Schraubaufnahmen, die fluchtend zu Schraubaufnahmen des Trägers 30 angeordnet werden können.

Durch die Schraubaufnahmen lassen sich Befestigungsschrauben 24 hindurchführen und auf deren Schraubbolzen endseitig Muttern 28 aufdrehen. Damit wird der Auswerfer 20 fest mit einer Stützfläche 37 des Trägers 30 verspannt. Wie die Zeichnungen erkennen lassen, ist der Auswerfer 20 im Bereich der Befestigungsseite 25 mit Ausnehmungen 20.2 versehen. Die obere Ausnehmung 20.2 nimmt die Köpfe der Befestigungsschrauben 24 auf und schützt sie so hinter der Förderfläche 21 vor dem abrassiven Angriff des abgetragenen Materials. Die untere Ausnehmung 20.2 zieht sich schürzenartig über den Träger 30 und schützt diesen hier. Der Auswerfer 20 ist zur Mittelquerachse symmetrisch und kann daher um 180° gedreht auf Umschlag in zwei Betriebsstellungen an dem Träger 30 befestigt werden.

## Patentansprüche

1. Auswerfereinheit für eine Straßenfräsmaschine mit einem Träger (30) und einem Auswerfer (20), der eine Förderfläche (21) aufweist,
wobei der Auswerfer (20) auswechselbar an dem Träger (30) befestigbar ist, **dadurch gekennzeichnet,**
**dass** der Auswerfer (20) in mindestens zwei verschiedenen Betriebsstellungen an dem Träger (30) befestigbar ist,
**dass** zum Wechsel der Betriebsstellungen der Auswerfer (20) um 180° verdreht anbaubar ist,
**dass** der Auswerfer (20) und der Träger (30) eine mechanische Schnittstelle bilden, die eine Montage des Auswerfers (20) auf Umschlag ermöglicht.

2. Auswerfereinheit nach Anspruch 1,
**dadurch gekennzeichnet,**
**dass** der Auswerfer (20) eine Befestigungsaufnahme, beispielsweise Schraubaufnahmen (29), und/oder einen Befestigungsansatz (20.1) aufweist, und dass der Auswerfer (20) mittels einem oder mehreren Befestigungselementen, beispielsweise Befestigungsschrauben (24), an der Befestigungsaufnahme (29) und/oder dem Befestigungsansatz (20.1) mittelbar oder unmittellbar mit dem Träger (30) verbunden ist.

3. Auswerfereinheit nach Anspruch 1 oder 2,
**dadurch gekennzeichnet,**
**dass** der Auswerfer (20) mittels einer Befestigungsseite (25) an einer Stützfläche (37) des Trägers (30) flächig abgestützt ist,
**dass** der Auswerfer (20) einen Fixieransatz (26.1, 26.2) und/oder eine Fixieraufnahme aufweist und
**dass** der Fixieransatz (26.1, 26.2) in eine Fixieraufnahme (37.1, 37.2) des Trägers (30) eingreift und/oder ein Fixieransatz des Trägers (30) in die Fixieraufnahme des Auswerfers (20) eingreift.

4. Auswerfereinheit nach einem der Ansprüche 1 bis 3,
**dadurch gekennzeichnet,**
**dass** der Träger (30) einen Befestigungsfuß (31) aufweist, an den ein Stützteil (35) angeformt ist, und
**dass** der Befestigungsfuß (31) eine im Wesentlichen in Vorschubrichtung (V) verlaufende Befestigungsfläche (33) aufweist.

5. Auswerfereinheit nach Anspruch 4,
**dadurch gekennzeichnet,**
**dass** der Befestigungsfuß (31) in und/oder entgegen der Vorschubrichtung (V) gegenüber dem Stützteil (35) verbreitet ist (Vorsprung (34) und/oder Ansatz (32).

6. Auswerfereinheit nach einem der Ansprüche 1 bis 5,
**dadurch gekennzeichnet,**
**dass** der Auswerfer (20) eine Förderfläche (21) aufweist, die im Wesentlichen quer zur Vorschubrichtung (V) der Auswerfereinheit angeordnet ist und zumindest bereichsweise in Richtung entgegen der Werkzeugvorschubrichtung gemuldet, insbesondere schaufelartig eingetieft ausgebildet ist.

7. Auswerfereinheit nach Anspruch 6,
**dadurch gekennzeichnet,**
**dass** die Förderfläche (21) zumindest bereichsweise konkav ausgebildet ist oder sie sich im gemuldeten Bereich aus Linear- und/oder Bogenabschnitten zusammensetzt.

8. Auswerfereinheit nach einem der Ansprüche 1 bis 7,
**dadurch gekennzeichnet,**
**dass** in die Förderfläche (21) eine oder mehrere Vertiefungen (21.1, 22) eingebracht sind.

9. Auswerfereinheit nach einem der Ansprüche 2 bis 8,
**dadurch gekennzeichnet,**
**dass** als Befestigungsaufnahme wenigstens eine Schraubaufnahme (29) verwendet ist,
**dass** die Schraubaufnahme (29) der Frontseite des Auswerfers (20) zugekehrt in eine Schraubenkopfaufnahme (29.1) ausläuft, in der ein Schraubenkopf einer Befestigungsschraube (24) zumindest bereichsweise unverdrehbar aufnehmbar ist.

10. Auswerfereinheit nach einem der Ansprüche 1 bis 9,
**dadurch gekennzeichnet,**
**dass** auf der der Förderfläche (21) abgewandten Rückseite eine oder mehrere angeformte Versteifungsrippen (27) angeordnet sind.

11. Auswerfereinheit nach einem der Ansprüche 1 bis 10,
**dadurch gekennzeichnet,**
**dass** die Befestigungsseite (25) einen konvexen Befestigungsabschnitt zur Anlage an einem konkaven Aufnahmeabschnitt des Trägers (30) aufweist.

12. Auswerfereinheit nach einem der Ansprüche 1 bis 11,
**dadurch gekennzeichnet,**
**dass** im Bereich der Förderfläche (21) wenigstens ein Verschleißschutzelement angeordnet ist, das aus einem verschleißfesteren Material als die Förderfläche (21) besteht.

13. Auswerfereinheit nach einem der Ansprüche 1 bis 12,
**dadurch gekennzeichnet,**
**dass** das Verschleißschutzelement aus einem Hartwerkstoffelement oder einer Auftragsschweißung gebildet ist.

14. Auswerfereinheit nach einem der Ansprüche 1 bis 13,
**dadurch gekennzeichnet,**
**dass** der Träger (30) den Auswerfer (20) derart hält, dass die Förderfläche (21) gegenüber der Bearbeitungsrichtung insbesondere um einen Winkel (α) von ± 20° um deren Radialausrichtung geneigt ist.

15. Auswerfereinheit nach Anspruch 14,
**dadurch gekennzeichnet,**
**dass** der Winkel (α) negativ entgegen der Bearbeitungsrichtung im Winkelbereich von - 5° bis - 20° verläuft.

## Claims

1. Ejector unit for a road milling machine, comprising a support (30) and an ejector (20) having a conveying surface (21), wherein the ejector (20) is replaceably fixable on the support (30),
**characterized in that,**
the ejector (20) is fixable in at least two different operating positions on the support (30),
the ejector (20) is rotatable through 180° to change the operating positions, the ejector (20) and the support (30) form a mechanical interface that enables flip-overably mounting of the ejector (20).

2. Ejector unit according to claim 1,
**characterized in that,**
the ejector (20) has a fixing recess, for example, a screw recess (29) and/or a fixing lug (20.1), and
that the ejector (20) is connected to the fixing recess (29) by one or more fixing elements, for example fixing screws (24), and/or the fixing lug (20.1) is connected directly or indirectly to the support (30).

3. Ejector unit according to claim 1 or 2,
**characterized in that,**
the ejector (20) is planarly supported on a supporting surface (37) of the support (30) by means of a fixing side (25),
the ejector (20) has a fixing lug (26.1, 26.2) and/or a fixing recess, and
the fixing lug (26.1, 26.2) engages in a fixing recess (37.1, 37.2) of the support (30), and/or a fixing lug of the support (30) engages in the fixing recess of the ejector (20).

4. Ejector unit according to one of the claims 1 to 3,
**characterized in that,**
the support (30) comprises a fixing foot (31) on which is formed a supporting part (35), and
the fixing foot (31) has a fixing surface (33) substantially extending in the feed direction (V).

5. Ejector unit according to claim 4,
**characterized in that,**
the fixing foot (31) protrudes in, and/or counter to, the feed direction (V) with respect to the supporting part (35) (protrusion (34)) and/or lug (32).

6. Ejector unit according to one of the claims 1 to 5,
**characterized in that,**
the ejector (20) comprises a conveying surface (21) that is arranged substantially transverse to the feed direction (V) of the ejector, and that is at least partially troughed in the direction opposite to the tool feed direction, in particular it has a deepened shovellike design.

7. Ejector unit according to claim 6,
**characterized in that,**
at least in regions, the conveying surface (21) is formed to be concave or comprises troughed regions of linear and/or curved sections.

8. Ejector unit according to one of the claims 1 to 7,
**characterized in that,**
one or more depressions (21.1, 22) are introduced into the conveying face (21).

9. Ejector unit according to one of the claims 2 to 8,
**characterized in that,**
at least one screw recess (29) is used as a fixing recess,
the screw recess (29) ends in a screw head recess (29.1) facing the front side of the ejector (20), wherein a screw head of a fixing screw (24) may be received to be at least partially non-rotatable.

10. Ejector unit according to one of the claims 1 to 9,
**characterized in that,**
one or more integrally formed stiffening ribs (27) are arranged on the rear side facing away from the conveying surface (21).

11. Ejector unit according to one of the claims 1 to 10,
**characterized in that,**
the fixing side (25) comprises a convex fixing section for bearing against a concave fixing section of the support (30).

12. Ejector unit according to one of the claims 1 to 11,
**characterized in that,**
at least one wear-resistant element is arranged in the region of the conveying surface (21), which consists of a more wear-resistant material than the conveying surface (21).

13. Ejector unit according to one of the claims 1 to 12,
**characterized in that,**
the wear-resistant element is formed of a hard material element or a weld overlay.

14. Ejector unit according to one of the claims 1 to 13,
**characterized in that,**
the support (30) holds the ejector (20) in such a way that the conveying surface (21) is inclined with respect to the operating direction, in particular by an angle (α) of ± 20° to its radial orientation.

15. Ejector unit according to claim 14,
**characterized in that,**
the angle (α) is negative in the angular range of -5° to -20° with respect to the operating direction.

## Revendications

1. Unité d'éjection pour une fraiseuse routière avec un support (30) et un éjecteur (20) qui comprend une surface de convoyage (21), l'éjecteur (20) pouvant être fixé de manière amovible au support (30),
**caractérisé en ce que**
l'éjecteur (20) peut être fixé dans au moins deux positions de fonctionnement sur le support (30),
pour le changement des positions de fonctionnement, l'éjecteur (20) peut être monté décalé de 180°,
l'éjecteur (20) et le support (30) forment une interface mécanique qui permet un montage de l'éjecteur (20) avec un retournement.

2. Unité d'éjection selon la revendication 1,
**caractérisée en ce que**
l'éjecteur (20) comprend un logement de fixation, par exemple des logements de vissage (29), et/ou un embout de fixation (20.1)
et **en ce que** l'éjecteur (20) est relié, au moyen d'un ou de plusieurs éléments de fixation, par exemple des vis de fixation (24), sur logement de fixation (29) et/ou sur l'embout de fixation (20.1) de manière indirecte ou directe avec le support (30).

3. Unité d'éjection selon la revendication 1 ou 2,
**caractérisée en ce que**
l'éjecteur (20) est appuyé sur sa surface, au moyen d'un côté de fixation (25), contre une surface d'appui (37) du support (30),
l'éjecteur (20) comprend un embout de fixation (26.1, 26.2) et/ou un logement de fixation et
l'embout de fixation (26.1, 26.2) s'emboîte dans un logement de fixation (37.1, 37.2) du support (30) et/ou un embout de fixation du support (30) s'emboîte dans le logement de fixation de l'éjecteur (20).

4. Unité d'éjection selon l'une des revendications 1 à 3,
**caractérisée en ce que**
le support (30) comprend un pied de fixation (31), sur lequel une pièce d'appui (35) est moulée et
le pied de fixation (31) comprend une surface de fixation (33) s'étendant globalement dans la direction d'avance (V).

5. Unité d'éjection selon la revendication 4,
**caractérisée en ce que**
le pied de fixation (31) est élargi dans et/ou à l'opposé de la direction d'avance (V) par rapport à la pièce d'appui (35) (saillie (34)) et/ou embout (32).

6. Unité d'éjection selon l'une des revendications 1 à 5,
**caractérisée en ce que**
l'éjecteur (20) comprend une surface de convoyage (21) qui est disposée globalement transversalement par rapport à la direction d'avance (V) de l'unité d'éjection et présente la forme d'une auge au moins partiellement dans la direction opposée à la direction d'avance de l'outil, plus particulièrement est creusée sous la forme d'une pelle.

7. Unité d'éjection selon la revendication 6,
**caractérisée en ce que**
la surface de convoyage (21) est réalisée au moins partiellement de manière concave ou est elle constituée, dans la zone en forme d'auge, de portions linéaires et/ou de portions coudées.

8. Unité d'éjection selon l'une des revendications 1 à 7,
**caractérisée en ce que**
dans la surface de convoyage (21) se trouvent une ou plusieurs cavités (21.1, 22).

9. Unité d'éjection selon l'une des revendications 2 à 8,
**caractérisée en ce que**
en tant que logement de fixation, au moins un logement de vissage (29) est utilisé,
le logement de vissage (29) débouche du côté frontal de l'éjecteur (20) dans un logement de tête de vis (29.1), dans lequel une tête de vis d'une vis de fixation (24) peut être logée de manière non rotative au moins partiellement.

10. Unité d'éjection selon l'une des revendications 1 à 9,
**caractérisée en ce que**
sur le côté arrière opposé à la surface de convoyage (21), se trouvent une ou plusieurs nervures de rigidification (27) moulées.

11. Unité d'éjection selon l'une des revendications 1 à 10,
**caractérisée en ce que**
le côté de fixation (25) comprend une portion de fixation pour un appui contre une portion de logement concave du support (30).

12. Unité d'éjection selon l'une des revendications 1 à 11,
**caractérisée en ce que**
au niveau de la surface de convoyage (21) se trouve au moins un élément anti-usure qui est constitué d'un matériau résistant plus à l'usure que la surface de convoyage (21).

13. Unité d'éjection selon l'une des revendications 1 à 12,
**caractérisée en ce que**
l'élément anti-usure est constitué d'un élément à matériau dur ou d'une soudure par rechargement.

14. Unité d'éjection selon l'une des revendications 1 à 13,
**caractérisée en ce que**
le support (30) maintient l'éjecteur (20) de façon à ce que la surface de convoyage (21) soit inclinée par rapport à la direction de traitement, plus particulièrement avec un angle (α) égal à ± 20° autour de son orientation radiale.

15. Unité d'éjection selon la revendication 14,
**caractérisée en ce que**
l'angle (α) s'étend négativement de manière opposée à la direction de traitement dans une plage d'angle de -5° à -20°.
